# EUROPEAN PATENT APPLICATION

(11) **EP 1 912 306 A1**
(43) Date of publication of application: **16.04.2008**
(21) Application number: 07118098.8
(22) Date of filing: 09.10.2007
(51) Int. Cl.: H02J 7/00, B60R 16/03

(54) **Occupant retained accessory power**

(30) Priority: 13.10.2006 US 580548
(71) Applicant: Delphi Technologies, Inc., Troy, Michigan 48007 (US)
(72) Inventor: Szczublewski, Francis E., Macomb, MI 48044 (US)
(74) Representative: Denton, Michael John

(57) **Abstract**

A method for retaining accessory power in a motorized vehicle (12) includes the steps of sensing whether an ignition (18) in the motorized vehicle (12) has been turned to an off position and sensing whether the vehicle doors (20) arc closed. The method also includes an occupancy detection system (24) that senses whether a seat is occupied by an occupant and that is also used to enable or disable deployment of an airbag (25) inside the vehicle (12).

## Description

### Technical Field

The present invention generally relates to a retained accessory power in a vehicle and, more particularly, to a retained accessory power detection system that provides accessory power to vehicle components.

### Background of the Invention

Accessory power to operate various vehicle electrical components (e.g., a radio) is made available in many vehicles after the vehicle has been shut off. In the conventional system, the accessory power is typically retained and available if the driver's side door has not been opened. A controller monitors the door position and allows accessory power to be maintained in the vehicle if the door has not been opened for a given time period. When the vehicle door is opened, the controller terminates the availability of the accessory power, making it no longer available to an occupant in the vehicle.

Oftentimes, accessory power is still desired by the occupants in the vehicle, despite the fact that the driver has left the vehicle. As an example, when the vehicle is being refuelled, the driver is frequently the person who refuels the vehicle, and thus leaves the vehicle by opening the door. In most retained accessory power environments, the action of opening the door terminates accessory power to the vehicle. This is an undesirable effect, as an occupant in the passenger seat or children in the backseat may wish to continue to hear the radio or be able to raise and lower windows.

In addition, a separate controller is often used to characterize whether an occupant is in the passenger seat for purposes of whether airbag deployment should be allowed or suppressed in the event of a collision. For example, deployment is generally allowed in the case of a normally seated adult occupant and suppressed when a child is placed in the same seat and cinched down with a seatbelt or child seat anchor. The controller otherwise does not typically provide information to any other system in the vehicle.

### Summary of the Invention

In one aspect of the present invention, a method is provided for retaining accessory power and includes the steps of determining that an ignition device is turned to an off position in a motor vehicle that includes at least a driver seat and passenger seat and at least a driver door and passenger door. A predetermined time period is established for retaining accessory power and retained accessory power is made available to predetermined vehicle components. The method further includes sensing whether the at least one vehicle door is closed and whether a seat is occupied by an occupant. Retained accessory power is provided and maintained if the at least one vehicle door is closed or an occupant is occupying a seat.

In another aspect of the present invention, a method for retaining accessory power in a motorized vehicle includes the steps of sensing whether an ignition device in the motorized vehicle has been turned to an off position and sensing whether the at least one vehicle door is closed. The method also includes the steps of sensing via an occupancy detection system whether a seat is occupied by an occupant enabling or disabling deployment of an airbag inside the vehicle based on the sensed occupant.

According to a further aspect of the present invention, a system that retains accessory power in a vehicle includes a door sensor that operably senses whether a vehicle door has been opened and an occupancy detection system that senses the presence of an occupant in a vehicle seat. A controller is operably connected to a vehicle ignition wherein, after an ignition device has been turned to an off position, the controller makes retained accessory power available to vehicle components if the occupancy detection system senses the presence of an occupant or if the door sensor senses that the vehicle door has not been opened.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a side elevational partial view of a vehicle passenger compartment incorporating the retained accessory power system of the instant invention;
FIG. 2 is a top view of a vehicle passenger compartment incorporating the retained accessory power system of the instant invention;
FIG. 3 is a block diagram of the retained accessory power system according to one embodiment of the present invention;
FIG. 4 is a flow diagram illustrating a method of control of the retained accessory power system according to one embodiment of the present invention; and
FIG. 5 is a flow diagram illustrating a method of control of the retained accessory power system according to another embodiment of the present invention.

### Description of the Preferred Embodiments

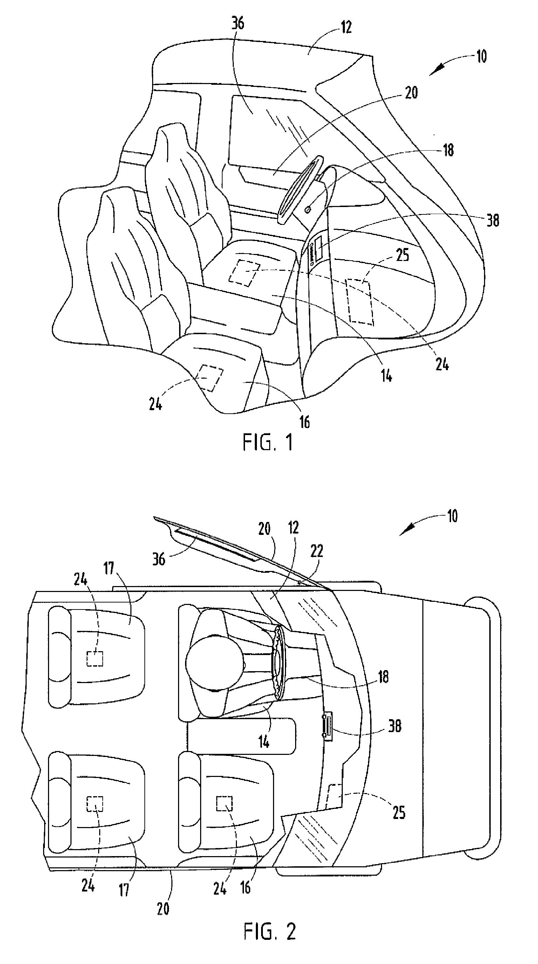

Referring to Figs. 1 and 2, a retained accessory power system 10 is shown, utilized in a vehicle 12 having at least a driver seat 14 and a passenger seat 16 and preferably a driver seat 14, passenger seat 16 and several back seats 17. The retained accessory power system 10 is located inside the vehicle 12 and is operably connected with an ignition 18, at least one vehicle door 20 (preferably the driver door) having a door sensor 22, and at least one occupancy detection system 24. The occupancy detection system 24 is typically included in a passenger seat 16 and may be included in additional seats such as the driver seat 14 and back seats 17 of the vehicle 12. The occupancy detection system 24 may be operably connected with an airbag deployment device 25 that controls the deployment of an airbag in the event the vehicle 12 is in a collision.

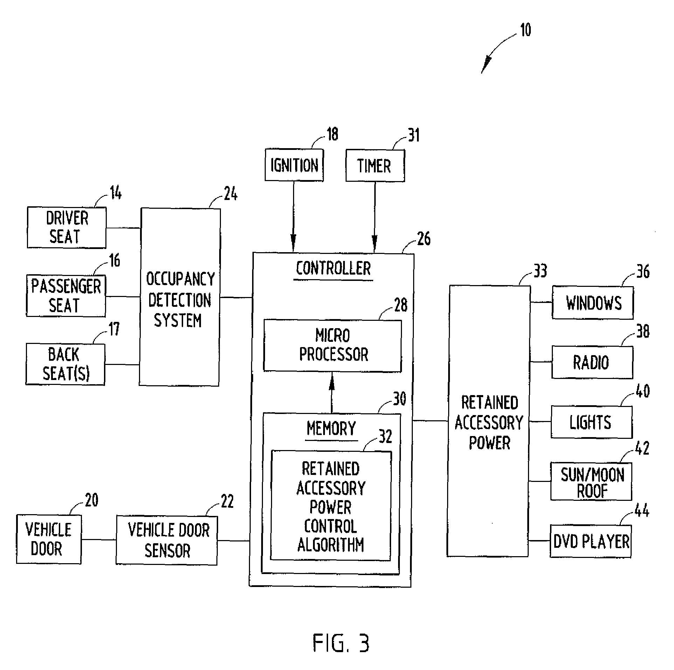

Referring to Fig. 3, the occupancy detection system 24 is also connected with a controller 26 that includes a microprocessor 28 and memory 30. The memory 30 stores a retained accessory power control algorithm 32 that includes logic pertaining to whether retained accessory power 33 should be made available to predetermined vehicle components. The controller 26 is connected to a timer 31 that tracks the time retained accessory power 33 will be made available to the predetermined vehicle components. The controller 26 is also operably connected to the vehicle ignition device 18 and initiates or suppresses retained accessory power 33 based on the ignition state of the ignition device 18. The controller 26 is operably connected with the occupancy detection system 24 which is located in each of the vehicle seats and at least the passenger seat 16. In addition, the vehicle door sensor 22 located in the at least one vehicle door 20 provides information to the controller 26 on whether the at least one vehicle door 20 has been opened or closed after the time the vehicle ignition device 18 is turned off. The controller 26 provides retained accessory power 33 to electrical components (devices) in the vehicle 12 (Figs. 1 and 2) such as the windows 36, radio 38, lights 40, sun/moon roof 42, and digital video disc player 44 if the retained accessory power control algorithm 32 logic requirements are met, as described further below. The retained accessory power 33 can be made controllable to power any number of electrically powered devices in the vehicle 12.

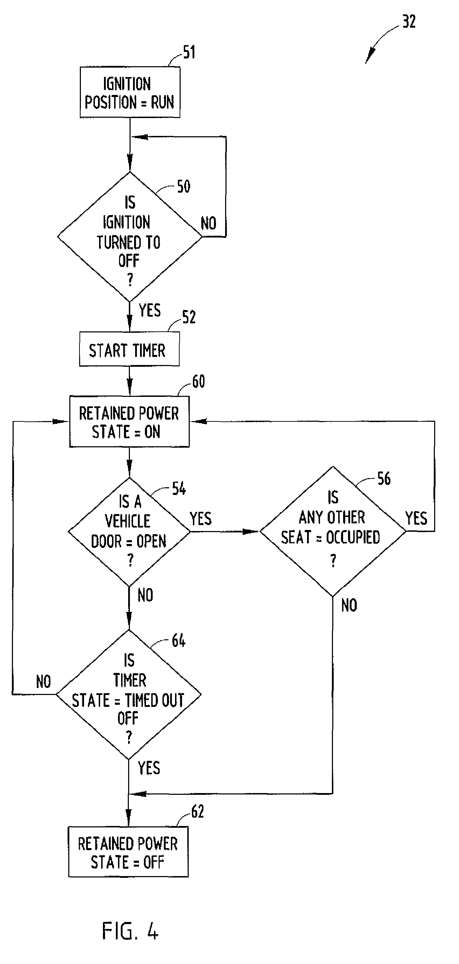

Referring to Fig. 4, the retained accessory power control algorithm 32 performs a method for retaining accessory power in a motorized vehicle 12. The method includes setting the ignition position to run (step 51) and determining whether the ignition 18 is turned off (step 50). If the ignition 18 is not turned to an off position, then the vehicle 12 (Figs. 1 and 2) is presumed to be running and standard electrical power is still available to components in the vehicle 12. If the ignition 18 is determined to be turned to an off position, a timer is activated in step 52 and then a retained accessory power state is turned on in step 60. In step 54 the retained accessory power control algorithm checks whether the at least one vehicle door 20 (via the vehicle door sensor 22) has been opened while the ignition 18 has been turned off, or was opened before the ignition 18 was turned off and has remained open. If so, then the retained accessory power control algorithm 32 senses whether any other seat is occupied in step 56. Alternatively, the retained accessory power control algorithm 32 may determine if just the passenger seat 16 is occupied in step 56. If any seat is occupied or, alternatively, just the passenger seat 16 is occupied 56, then the retained accessory power state remains on in step 60. If no other seats are occupied, then the retained accessory power state is turned off in step 62 and retained accessory power 33 is no longer made available to components in the vehicle 12 such as the windows 36, radio 38, lights 40, sun/moon roof 42, and digital video disc player 44 (Fig. 3). When the retained accessory power is turned on in step 60, the timer, which started in step 52, allots a predetermined amount of time for providing retained accessory power 33. If a seat is determined to be occupied in step 56 and the retained accessory power state is on in step 60, then the retained accessory power control algorithm 32 will further evaluate whether the predetermined time to provide retained accessory power has expired in step 64. If the predetermined time in step 64 has expired, then the retained accessory power state will be turned off in step 62. If the predetermined time period has not expired in step 64, then the retained accessory power state will remain on in step 60 until the predetermined time period is determined to have expired in step 64.

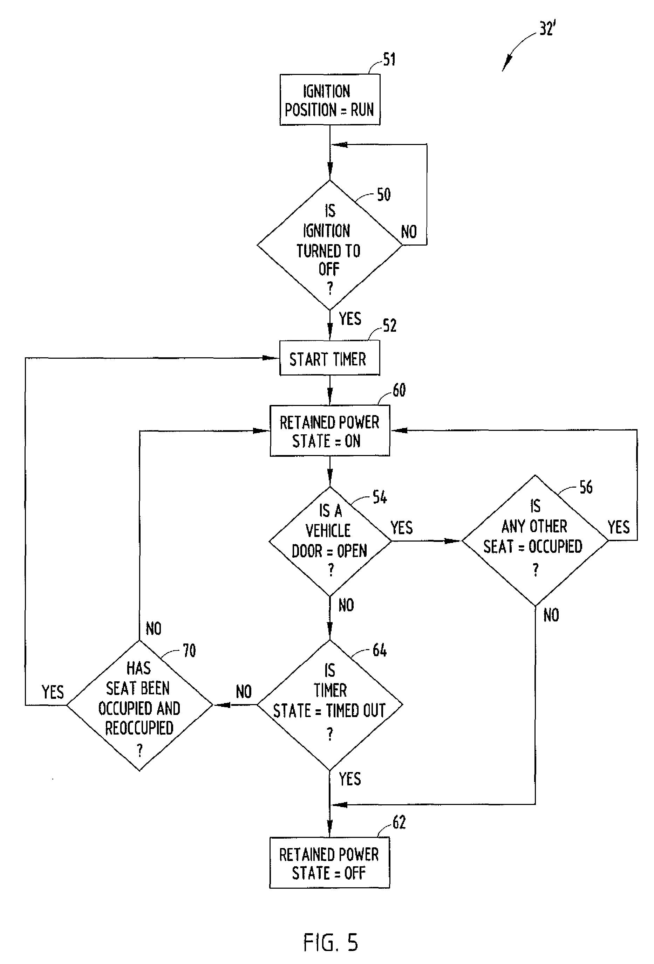

Referring to Fig. 5, in an alternative embodiment, the retained accessory power control algorithm 32' performs a method for retaining accessory power in a motorized vehicle. The method includes setting the ignition 18 position to run (step 51) and determining whether the ignition 18 is turned off (step 50). If the ignition 18 is not turned to an off position, then the vehicle 12 is presumed to be running and standard electrical power is still available to components in the vehicle 12. If the ignition 18 is determined to be turned to an off position, a timer is activated in step 52 and then a retained accessory power state is turned on in step 60. In step 54 the retained accessory power control algorithm checks whether the at least one vehicle door 20 (via the vehicle door sensor 22) has been opened while the ignition 18 has been turned off, or was opened before the ignition 18 was turned off and has remained open. If so, then the retained accessory power control algorithm 32' assesses whether any other seat is occupied in step 56. Alternatively, the retained accessory power control algorithm 32' may determine if just the passenger seat 16 is occupied in step 56. If any seat is occupied or, alternatively, just the passenger seat 16 is occupied 56, then the retained accessory power state remains on in step 60. If no other seats are occupied, then the retained accessory power state is turned off in step 62 and retained accessory power 33 is no longer made available to components in the vehicle 12 such as the windows 36, radio 38, lights 40, sun/moon roof 42, and digital video disc player 44 (Fig. 3). When the retained accessory power is turned on in step 60, the timer, which started in step 52, allots a predetermined amount of time for providing retained accessory power 33. If a seat is determined to be occupied in step 56 and the retained accessory power state is on in step 60, then the retained accessory power control algorithm 32' will further evaluate whether the predetermined time to provide retained accessory power has expired in step 64. If the predetermined time in step 64 has expired, then the retained accessory power state will be turned off in step 62. If the predetermined time in step 64 has not expired, then the retained accessory power control algorithm 32' will determine whether any seat has been unoccupied and reoccupied in step 70 during the predetermined time in step 64 that retained accessory power 33 is to be on (step 60). If any seat has not been unoccupied and reoccupied in step 70, then the predetermined time in step 64 continues to run and retained accessory power 33 will terminate when the predetermined time in step 64 has expired. If any seat has been unoccupied and reoccupied in step 70, then the timer, which started in step 52, is reactivated and the predetermined time in step 64 for providing retained accessory power 33 begins anew starting from when the seat was reoccupied in step 70.

A vehicle that incorporates a retained accessory power system that utilizes both a door sensor and an occupancy detection system to provide retained accessory power is desirable, as it could be programmed to provide retained accessory power to the occupants of a vehicle even when the driver side door has been opened. A retained accessory power system utilizing both an occupancy detection system and a vehicle door sensor would prove useful and would be an improvement in the art.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A method for retaining accessory power (33), the method comprising the steps of:
determining that an ignition device (18) is turned to an off position in a motor vehicle (12) that includes at least one vehicle door (20);
establishing a predetermined time period (52) for retaining accessory power;
sensing whether the at least one vehicle door (20) is closed;
sensing (56) whether a driver seat (14), a passenger seat (16), or a backseat (17) in the motor vehicle (12)is occupied by an occupant;
making retained accessory power (33) available to predetermined vehicle components (60); and
providing power to and maintaining power of the predetermined vehicle components (60) if the at least one vehicle door (20) is closed or an occupant is occupying a seat.

2. The method of claim 1, further comprising:
terminating the retained accessory power (33) if the time period for retaining accessory power has expired (64).

3. The method of claim 1, wherein:
power is retained only if the at least one vehicle door (20) is closed or an occupant is occupying any seat but the driver seat (14).

4. The method of claim 1, wherein:
power is retained only if the at least one vehicle door (20) is closed or an occupant is occupying the passenger seat (16).

5. The method of claim 1, wherein:
one of the predetermined vehicle components is a vehicle radio (38).

6. The method of claim 1, wherein:
one of the predetermined vehicle components is a vehicle window (36).

7. The method of claim 1, wherein the step of sensing whether a seat is occupied by a passenger comprises:
an occupancy detection system (24) sensing the presence of an occupant.

8. The method of claim 7, wherein:
the occupancy detection system (24) is also used to sense an occupant for enabling or disabling deployment of an airbag (25).

9. A method for retaining accessory power (33) in a motorized vehicle (12), the method comprising the steps of:
sensing whether an ignition device (18) in the motorized vehicle (12) is turned off;
sensing whether the at least one vehicle door (20) is closed;
sensing whether a seat in the vehicle (12) is occupied by an occupant using an occupancy detection system (24) that is also used to enable or disable deployment of an airbag (25) inside the vehicle (12).

10. The method of claim 9, further comprising the steps of:
setting a first predetermined period of time (52) in which retained accessory power (33) will be available.

11. The method of claim 10, further comprising the steps of:
terminating the retained accessory power (33) if the time period for providing retained accessory power has expired (64).

12. The method of claim 10, further comprising the steps of:
initiating a supplemental period in which retained accessory power (33) is available if all seats have been unoccupied and subsequently one of the seats is reoccupied within the first predetermined period of time that retained accessory power (33) will be available.

13. The method of claim 10, further comprising the steps of:
retained accessory power (33) is provided only if the vehicle doors are closed or an occupant is occupying the passenger seat (16).

14. The method of claim 10, wherein:
retained accessory power (33) is provided only if the vehicle doors are closed or an occupant is occupying any seat but the driver's seat (14).

15. The method of claim 10, wherein:
one of the predetermined vehicle components is a vehicle radio (38).

16. The method of claim 10, wherein:
one of the predetermined vehicle components is a vehicle window (36).

17. A system that retains accessory power in a vehicle (12), said system comprising:
a door sensor (22) that operably senses whether a vehicle door (20) has been opened;
an occupancy detection system (24) that senses the presence of an occupant in a vehicle seat; and
a controller (26) operably connected to a vehicle ignition (18) wherein after an ignition device (34) has been turned to an off position, the controller (26) makes retained accessory power (33) available to vehicle components if the occupancy detection system (24) senses the presence of an occupant or if the door sensor (22) senses that the vehicle door (20) has not been opened.

18. The accessory power retaining system (10) of claim 17, wherein:
the vehicle components are the radio (38) and the windows (36).

19. The accessory power retaining system (10) of claim 17, wherein:
the occupancy detection system (24) also senses the presence of an occupant for purposes of deployment of an airbag (25).

20. The accessory power retaining system (10) of claim 17, further comprising:
a timer (31) that is operably connected with the controller (26) and that terminates the retained accessory power (33) after a given time period has expired.

21. The accessory power retaining system (10) of claim 17, further comprising:
a microprocessor (28) and memory (30), wherein the memory (30) includes a control algorithm (32) adapted to initiate retained accessory power (33) in a motor vehicle (12).
